# EUROPEAN PATENT SPECIFICATION

(11) **EP 4 118 883 B1**
(45) Date of publication and mention of the grant of the patent: **31.01.2024**
(21) Application number: 21712448.6
(22) Date of filing: 11.03.2021
(51) Int. Cl.: H04W 48/16, H04W 8/18, H04W 48/18, H04W 48/20, H04W 88/06

(54) **METHOD FOR EFFICIENT FREQUENCY SCAN**
VERFAHREN ZUR EFFIZIENTEN FREQUENZABTASTUNG
PROCÉDÉ DE BALAYAGE EFFICACE DE FRÉQUENCES

(30) Priority: 11.03.2020 WO PCT/CN2020/078693
(43) Date of publication of application: 18.01.2023
(73) Proprietor: Telit Cinterion Deutschland GmbH, 81541 München (DE)
(72) Inventor: BREUER, Volker, 16727 Boetzow (DE); LITAO, Ye, Beijing 100096 (CN); WEHMEIER, Lars, 14612 Falkensee (DE); CHEN, Dong, Beijing 100097 (CN)
(74) Representative: Pearl Cohen Zedek Latzer Baratz UK LLP
(86) International application number: PCT/EP2021/056154
(87) International publication number: WO 2021/180833

(56) References cited:
- US-A1- 2004 224 689
- US-A1- 2015 056 985
- US-A1- 2016 345 246

## Description

### FIELD OF THE INVENTION

The present invention relates to a method for a user equipment for efficient frequency scan. The invention also pertains to a user equipment using said method.

### BACKGROUND OF THE INVENTION

Generally, in the field of wireless communication those user equipments that are configured for operating in a cellular network need to carry out a frequency scan of available base stations at least after powering up for camping on a first base station. During operation of the user equipment after first registration further frequency scan operations need to be carried out.

In the current situation of installed cellular networks with radio access networks of legacy standards of 2G and 3G in parallel to 4G and now upcoming 5G in parallel, such frequency scan of capable user equipments need to cover a far larger amount of frequency ranges than in the past. With the introduction of NB-IoT even for low-cost resp. bandwidth-limited (BL) user equipments, it is possible that it will be served in any channel of the populated frequency bands, therefore a complete scan is necessary, which is in particular carried out sequentially due to the availability of only one transceiver per device. During that time in other words no other communication is possible. Such duration of a frequency scan now goes in the range of minutes which is not acceptable for any type of application. Moreover for battery powered user equipments the power consumption is massively increased for carrying out a frequency scan for such a duration. Even worse, the power scan does not only have to be carried out after powering-on the user equipment but also later for mobility management reasons. It may occur for some user equipments depending on the use case resp. type of device i.e. for tracking and trace devices when potentially leaving a country via ship, they often go into long-term sleep. Once arriving in a new harbor they may not have accurate information on the area available and hence may need to perform again a frequency scan from scratch. Means increased search efforts depending on available information to last camped cell (if any) and whether that is still accurate or outdated.

Therefore it requires an improved method for efficiently carrying out the frequency scan in order to massively reduce the time spent for a frequency scan.

It is therefore the goal of present invention to overcome the mentioned disadvantages and to propose a solution for an improved method for frequency scan, in particular for narrowband / bandwidth limited user equipments. Further alternative and advantageous solutions would, accordingly, be desirable in the art.

US 2015/056985 provides the capability for a UE to implement a partial PLMN scan, providing quick results to a user's request for a manual PLMN scan, in a way that is expedited relative to the conventional method of providing PLMN results only when a full scan is completed.

### SUMMARY OF THE INVENTION

For this it is according to a first embodiment of the invention suggested a method for a user equipment according to claim 1. It is further suggested according to a second embodiment of the invention a user equipment according to claim 8.

According to a first aspect of the invention it is proposed a method for conducting a frequency scan by a user equipment configured to operate in one of a plurality of cellular networks, each comprising a plurality of base stations employing a plurality of frequency bands, the method comprising the steps for the user equipment of:
- maintaining a list of frequency bands assigned to at least one cellular network,
- determining at least one network identification criterion relating to a cellular network,
- determining a list of candidate frequency bands from the list of frequency bands considering said at least one network identification criterion,
- conducting a frequency band scan considering said list of candidate frequency bands.

The method is applied to a user equipment capable of operating with a base station being part of a cellular network implementing the technology standards of 2G, 3G, 4G, 5G or beyond. The cellular network comprises a plurality of base stations, implementing at least one of these technology standards as so called radio access technologies. The radio access technology further comprise a couple of categories, which are like "substandards", in particular LTE Category NB-IoT, Cat-M etc. The cellular network further comprises further network components communicatively linked to the base stations for fulfilling the communication tasks.

The user equipment is capable of operating with base stations covering a plurality of frequency bands. It is likewise capable of operating in a plurality of cellular networks. That implies that depending on the cellular network, resp. the radio access network resp. the radio access technology each base station operates in at least one assigned frequency band.

Depending upon the radio access technology the search for such frequency bands of base stations e.g. after powering-on the user equipments might take a while, as pointed out before.

The user equipment has in the beginning in particular no knowledge about base stations around, that it can camp on. If the user equipment is capable of operating in more than one radio access technology resp. network, in particular in different categories (like LTE NB-IoT, Category M etc.) it is to expect that the frequency band scan over the possible frequency bands lasts a remarkable time.

Moreover the user equipment needs to apply a certain radio access technology protocol for finding applicable frequency bands for that radio access technology during a frequency band scan.

One first general approach is to narrow down the amount of possible frequency bands in which a base station, where the user equipment is able to operate with, might be available.

For solving the problem the user equipment maintains a list of frequency bands assigned to at least one cellular network. Such a list of frequency bands preferably comprises for a plurality of cellular networks a multitude of frequency bands that are employed by said cellular network. Preferably an indication of the respective cellular network is stored with each record of the frequency band list.

Preferably the list is stored in a permanent memory unit accessible by or part of the user equipment.

In particular this list of frequency bands comprises additional information for identifying relevant frequency bands according to said inventive method and further embodiments thereof.

The frequency bands are in particular depicted by a representative frequency in kHz or a channel number or any other indication which is in particular derived from frequency or channel number. The general frequency bands and technologies which can be deployed therein are provided by 3GPP specifications for the respective ITU areas and information related to frequency owner/operator per country can be further retrieved from public information. Hence it is possible to maintain an entire frequency band list for technologies and operators who own the respective parts of the frequency band in each country. It should be clear that the user equipment will only consider those parts of the frequency list which it supports accordingly, i.e. being able to operate in said frequency band.

When the user equipment is supposed to carry out a frequency scan it can make use of the stored list of frequency bands.

For doing so the user equipment determines at least one network identification criterion related to a cellular network. Said cellular network is in particular the one, the user equipment wants to operate with.

There are many ways to determine said at least one network identification criterion.

This includes to determine from a subscriber identification unit, like a (U)SIM card, a valid network identification criterion by way of a MNC (Mobile Network Code), that is stored as home or preferred network information in the subscriber identification unit (EF HPLMN, EF EPRL).

Additionally it is preferred to consider the SIM field EF FPLMN, which indicates a forbidden PLMN (cellular network). This can be used for assuring that the list of candidate frequency bands does not comprise frequency bands assigned to a forbidden cellular network.

In a particular advantageous aspect it is propose that said user equipment being communicatively coupled to at least one subscriber identification unit, for determining said at least one network identification criterion the method comprises the step of:
- detecting an indication relating to an area where the user equipment is located,
- determining from the subscriber identification unit at least one network identification criterion of a cellular network operating in said area, where the user equipment is eligible to operate in.

With this aspect it is proposed that for determining the at least one network identification criterion the user equipment determines an area where the user equipment is located. This area indication is supposed help identifying at least one network identification criterion for cellular networks available in this area.

There are a couple of ways available to determine the area indication. According to an aspect it is proposed that the step of determining an indication relating to an area where the user equipment is located comprises at least one out of the group of:
- starting a frequency band scan on the supported frequency for identifying one of said base stations, and upon identification of said base station detecting an indication of the area where the base station is located,
- or carrying out a location determination by means of a positioning sensor communicatively coupled to the user equipment.

This aspect suggests two preferred options for identifying the area identification.

According to the first option the user equipment carries out a first frequency scan for identifying at least one base station. This can be any base station. The user equipment retrieves from the base station, in particular by means of reading the broadcast channel (BCCH), an indication in which area the base station is located. This is in particular detected through the Mobile Country Code (MCC).

According to the second option the user equipment is communicatively coupled with at least one sensor for positioning the user equipment. This can be any type of global navigation satellite system (GNSS), but also dead reckoning, compass, gyro, map matching etc. are encompassed to identify the position, and consequently the area where the user equipment is located. This area information may then be used for checking the preferred network information from the (U)SIM, which will in return deliver at least one cellular network identification criterion (in particular a Mobile Network Code MNC) from a cellular network, where the user equipment is eligible to operate with.

This is a comparably reliable procedure as long as the user equipment is operating in frequently used countries from the perspective of the home PLMN. E.g. for a German PLMN it is very likely that the networks of the European neighbor countries are available, and by that the network identification criterion from a preferred network for these countries can be identified.

As an alternative or additional way to determine the at least one network identification criterion it is suggested another aspect.

According to that it is proposed that for determining the at least one network identification the method comprising the steps of receiving from one of the plurality of base stations at least one system information block, comprising a plurality of system information items, said at least one system information block comprising a system information item comprising a network identification criterion.

This approach has the goal to determine the MNC from the base station the user equipment is currently operating with, at least by way of reading the broadcast channel (BCCH) comprising the system information blocks. These include the network identification criterion, in particular the MNC from the cellular network it is part of. Also this information may be used as a network identification criterion.

Preferably the suggested aspects for identifying a network identification criterion are combined.

With the determined at least one network identification criterion the user equipment may carry out the step of determining a list of candidate frequency bands. This is done by means of a filtering steps on the list of frequency bands. For that the maintained list of frequency bands is filtered taking into account at least the at least one network identification criterion. In the simplest embodiment in the list of frequency bands each record provides at least a frequency band indication and the network identification criterion where the frequency band is assigned to. The step of filtering therefore comprises simply a selection of all frequency bands which have assigned the determined at least one network identification criterion.

Optionally other criteria might also be applied, like the area identification. This leads to a remarkably lower amount of frequency bands that would need to be scanned in order to identify a frequency band of a base station where the user equipment may camp on.

According to another aspect it is proposed that the cellular network comprising at least one radio access network, and a base station is part of at least one of said radio access networks, and the list of frequency bands comprises an indication of the respective radio access network, wherein for determining the list of candidate frequency bands it is further considered a selected radio access network.

This aspect additionally facilitates for filtering the list of frequency bands the respective radio access network. Depending upon the type of user equipment it may be configured to operate in only a subset of available radio access networks, and in particular only a limited number of categories.

E.g. bandwidth-limited user equipments are configured to operate in LTE Category NB-IoT or Cat-M only. For such a user equipment it is of no use to scan frequency bands of the 2G or 3G RAT of the cellular network it is eligible to operate in. Even the frequency bands where no NB-IoT is deployed could be avoided.

Therefore according to this aspect it is proposed that the list of frequency bands additionally comprises an indication which at least one radio access network resp. radio access technology the deployed on the respective frequency band.

This additional information is used for further filtering the list of frequency bands in order to gather the list of candidate frequency bands, considering a selected radio access network.

With that aspect it is possible to further narrow down the candidate list of frequency bands matching to the user equipments needs. Due to the fact that the frequency scan is carried out in a certain radio access technology resp. category, this embodiment is further advantageous, as the way of doing the frequency scan on the candidate list of frequency bands matches the deployed technology.

For doing so, the user equipment needs to select a radio access network, which is in the following the selected radio access networks.

In the simplest aspect the selected radio access network is the one, where the user equipment is capable of operating in. For a user equipment only capable of operating in LTE Cat-M this is simple.

In a more advanced aspect it is proposed that the selected radio access network is derived from a convenience order of radio access networks for conducting a frequency band search.

The rationale behind this aspect is that the user equipment, which is capable of operating in more than one radio access networks, is supposed to first retrieve information from a base station of the eligible cellular network, which is most comfortable to find. Or in other words, where the frequency scan requires the least effort (in terms of time and/or power consumption) for the user equipment. This does not necessarily have to be the radio access network where the user equipment prefers to operate in later on.

This aspect requires a convenience order, e.g. as configuration setting, which predetermines which radio access technology resp. category is easier to find than others. E.g. for NB-IoT it requires to scan each and every 200 kHz section of the frequency bands. Should the user equipment be at least capable of operating in higher categories of LTE, it is sufficient to check the central subcarriers for the master information block (MIB), for identifying a whole frequency band deployment. This is also true for LTE Cat-M, as Cat-M is deployed along with LTE and the Master Information Block (MIB) contains information whether Cat-M is available in said cell. As LTE has usual larger bandwidth i.e. up to 20MHz the center 6PRBs for finding the MIB have only very limited frequency space, i.e. the UE can search very focused. Whereas NB-IoT can be deployed in 200kHz by a raster of 5, which limits the search a bit, but for standalone deployment every 200kHz carrier would need to be searched. Means when considering a frequency band of 60MHz, it is likely that if LTE is deployed, there will be 3 LTE carriers each occupying 10MHz and hence can only be shifted very limited in the 20MHz typically owned by an operator. NB-IoT may be deployed in band or guard band, which already gives quite many options where to search for the synchronization information.

Hence it appears that higher LTE Categories are easier to acquire than NB-IoT carrier. Such rationale is considered when creating the convenience order. This aspect preferably assigns to each radio access network resp. category a suitability rating.

Depending on the available resp. supported radio access technologies of the user equipment the selected radio access network is consequently identified from the convenience order.

However this does not need to be the desired radio access network, where the user equipment (resp. its user) want to operate. Due to the fact that the operation on a certain radio access technology may be in terms of power consumption better suited than to carry out a frequency band scan for it - this is in particular true for NB-IoT (NB-IoT provides power saving features, as Cat-M but has in addition smaller bandwidth being more suited for devices only sending small data) - the selected radio access network may not be the one where the user equipment wants to operate.

So the desired/operated radio access network technology also heavily depends on the use case, i.e. NB-IoT and Cat-M provide best power saving features, i.e. best suited for devices not being recharged and staying in the field for long time. Which radio access technology to select, provided more than one is present, depends also on the data amount to be sent. Moreover search is preferred in radio access technology having global but limited number of bands e.g. GSM or LTE for above mentioned reasons being easier to search.

According to an aspect it is therefore suggested the user equipment maintaining a desired radio access network indication, wherein in case the radio access network indicated by the desired radio access network indication differs from the selected radio access network the method further comprising the step of searching and switching to a base station of the radio access network indicated by said desired radio access network indication.

This aspect governs the depicted situation of a variation of selected and desired radio access network. Hence it is suggested that once the user equipment is camping on a base station of the cellular network in the selected radio access network - in particular due to the convenience order - the user equipment is supposed to switch afterwards to the desired radio access network. For that it stores the desired radio access network indication. If the selected radio access network differs from the desired radio access network, the switch is carried out.

According to a first aspect that switch is carried out by means of searching said base station considering said list of candidate frequency bands is carried out by means of said desired radio access technology.

In this first variant it is foreseen to analyze the list of candidate list frequency bands to figure out frequency bands for the desired radio access networks in order to identify base stations supporting the desired radio access technology. According to a second aspect that switch is carried out by means of searching said base station considering said list of candidate frequency bands is carried out by means of said selected radio access technology, and retrieving deployment information of said desired radio access technology.

This aspect in particular comprises to determine neighbor cell list of the current base station, in particular from the SIB broadcast.

With that neighbor cell list the user equipment retrieves information about neighbor cells implementing the desired radio access network. This leads to identifying base stations of the respective desired radio access technology. When a base station is identified by the user equipment, a cell reselection is carried out to said identified base station, in particular that with the highest suitability level, in order to then operate on a base station in the desired radio access network.

According to another aspect it is proposed that after detection of said indication relating to an area, in case in the list of frequency bands no candidate frequency bands are available for cellular networks of said area:
- requesting from a remote server an update for the list of frequency bands for said area,
- downloading the update and storing it in the list of frequency bands.

This aspect is foreseen in particular for situations where the user equipment is used in an area or region where no or not sufficient information for the available frequency bands are comprised in the list of candidate frequency bands.

In that case it is foreseen to update the list of candidate frequency bands. For that it requires after identification of the area - in particular in course of camping on a base station of a cellular network where the user equipment is eligible to operate in or via GNSS sensors of the UE - to download from a remote server an update of the list of candidate frequency bands, in particular by depicting the area where the user equipment is currently located.

The downloaded candidate frequency bands are stored in the user equipments volatile or permanent memory and such maintained for the next frequency band scan.

This aspect might not help for the first step of acquiring a base station, but for all subsequent steps. As the frequency scan is carried out repeatedly during the runtime of a powered-on user equipment the user equipment can take advantage of this embodiment when being operated in a new region. According to another aspect it is proposed that in case no candidate frequency bands for said network identification criterion is available, applying a default list of candidate frequency bands.

This aspect acts as a fallback for the situation that no list of candidate frequency bands are available for the region. This embodiment may be applied before the previous embodiment, or even when no downloadable information are available.

With the default list of frequency bands it is preferably defined most likely frequency bands, which are available in the majority or regions resp. countries, at least for certain radio access networks. This allows the user equipment to start camping on a base station of the cellular network, and then switch to a base station of a desired radio access network later, in particular after acquiring neighbor cell information for said base station.

With this aspect a fallback is provided for user equipments to reduce the likelihood to carry out a full frequency scan as much as possible. Only in case no list of candidate frequency bands for the region/country where the user equipment is located is available and none of the default list of frequency bands is populated by a cellular network in that area, where the user equipment is eligible to operate in, only then a full frequency scan is necessary. This is compared to the current situation a massive improvement, which is provided with the invention and the suggested embodiments.

Preferably such default list of frequency bands is also updated regularly, in particular according to the process suggested in the previous aspect.

According to another aspect of the invention it is proposed a user equipment configured to operate in one of a plurality of cellular networks, each comprising a plurality of base stations employing a plurality of frequency bands, wherein the user equipment is configured to:
- maintain a list of frequency bands assigned to at least one cellular network,
- determine at least one network identification criterion relating to a cellular network,
- determine a list of candidate frequency bands from the list of frequency bands considering said at least one network identification criterion,
- conduct a frequency band scan on said list of candidate frequency bands. This aspect relates to a user equipment for operating in cellular networks according to one or more of the technology standards of 2G, 3G, 4G, 5G or beyond.

The user equipment is equipped with a communication unit, in particular comprising transmitting and receiving circuitry, preferably a transceiver. It further comprises processing circuitry for controlling the transceiver and potential other components of the user equipment. Further the user equipment has a memory unit, either or both for permanent and volatile storage of data, in particular operating software and configuration data like a list of candidate frequency bands, and a power supply, in particular a (chargeable) battery. Said memory unit is in particular either part of the user equipment or the user equipment has access to it.

The user equipment is preferably configured to be communicatively coupled to at least one subscriber identification unit, that means (U)SIMs, (e)UICCs, and other types of chip cards, either removable or soldered, or as part of another component like a baseband chip.

The user equipment is therefore configured to operate within a cellular network on a base station in at least one radio access technology, resp. category, like NB-IoT, LTE Cat-M etc.

The second aspect of the invention shares the advantages of the first aspect.

As it is shown this invention advantageously solves the depicted problem and offers a solution which massively reduces the amount of full frequency scans, and consequently the time and power that is needed for identifying available frequency bands for a user equipment for operating in a certain region.

### BRIEF DESCRIPTION OF THE DRAWINGS

The following description and the annexed drawings set forth in detail certain illustrative aspects and are indicative of but a few of the various ways in which the principles of the embodiments may be employed. Characteristics and advantages of the present invention will appear when reading the following description and annexed drawings of advantageous embodiments given as illustrative but not restrictive examples.
- Fig. 1: represents an exemplifying deployment of frequency bands in various radio access technologies according to the prior art;
- Fig. 2: represents a user equipment of the type to which the present invention is applied as an embodiment;
- Fig. 3: shows a flow chart according to an aspect of the invention;
- Fig. 4: represents a flow chart according to an aspect of the invention;

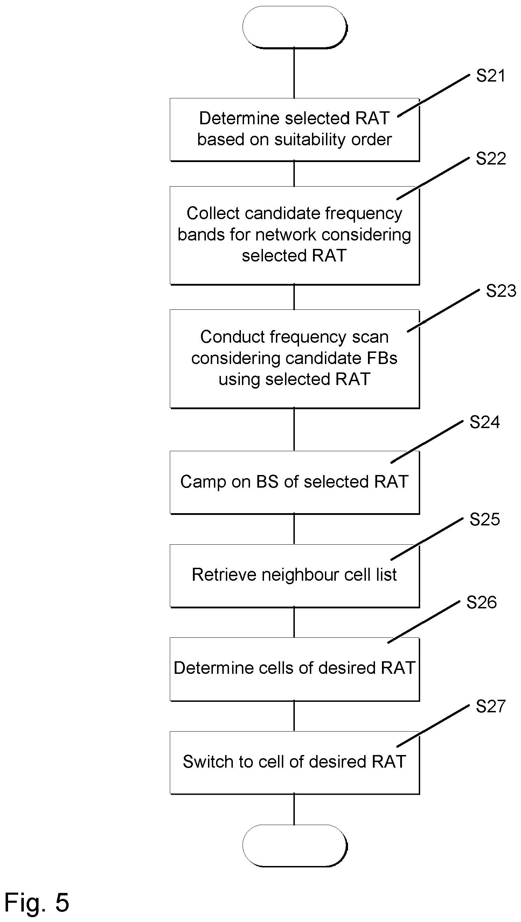

- Fig. 5: shows a flow chart according to the main embodiment of the invention;

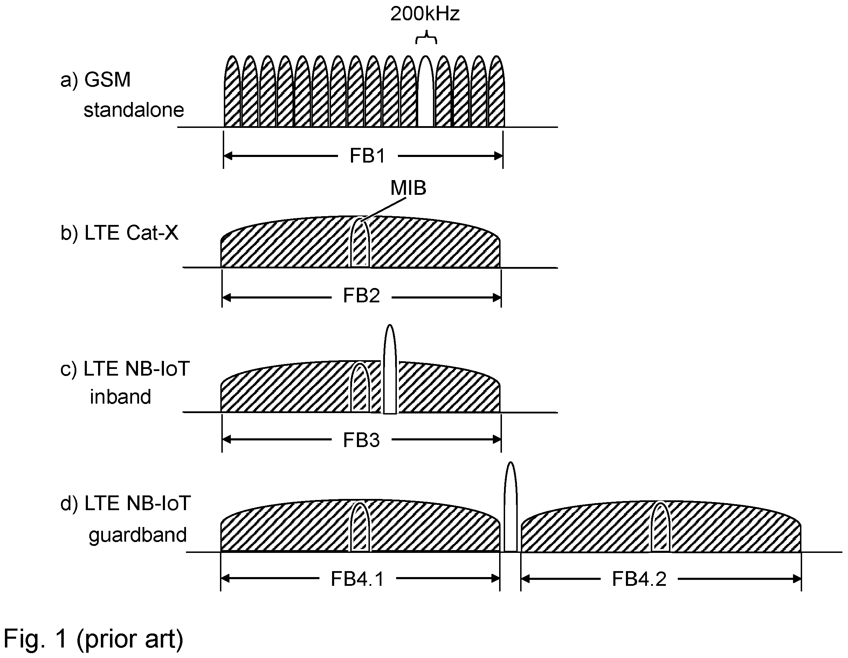

FIG. 1 shows a couple of exemplifying schematic frequency band diagrams for various radio access technologies, including categories, as known from the prior art. This illustrates how different the frequency bands are deployed. E.g. in Fig. 1a the GSM standalone deployment is shown, which requires for the user equipment to scan each 200 kHz block of a GSM deployment in a certain frequency range.

For LTE however various categories are known. In the common higher categories here depicted as LTE-CATx, which represents e.g. LTE-Cat M, LTE-Cat 1, 2, up to 16.

Fig 1b shows a frequency band for LTE CATx. For the user equipment it is sufficient to check for the frequency band FB2 the central subcarriers in the size of 6 PRBs (Physical Resource Blocks), where the master information block MIB is located. When the MIB can be successfully decoded, the user equipment knows that this frequency band is populated by a base station in proximity of the location where the user equipment is positioned.

For the lowest LTE category NB-IoT however the situation is different. NB-IoT is normally deployed embedded in or close to a higher category frequency band. One option is shown in Fig 1c, where the NB-IoT 200 MHz section is deployed inband in the frequency band FB3.

For finding this section the user equipment is required to scan each 200 MHz section of this frequency band, and in theory of each other. It is obvious that this may be time consuming.

Moreover NB-IoT does not need to be deployed inband. It is also possible as shown in Fig 1d that the 200 MHz section where NB-IoT is deployed is outside of the regular frequency bands FB4.1 and FB4.2. This is called guard-band deployment. It requires for the user equipment to scan beyond the regular frequency bans.

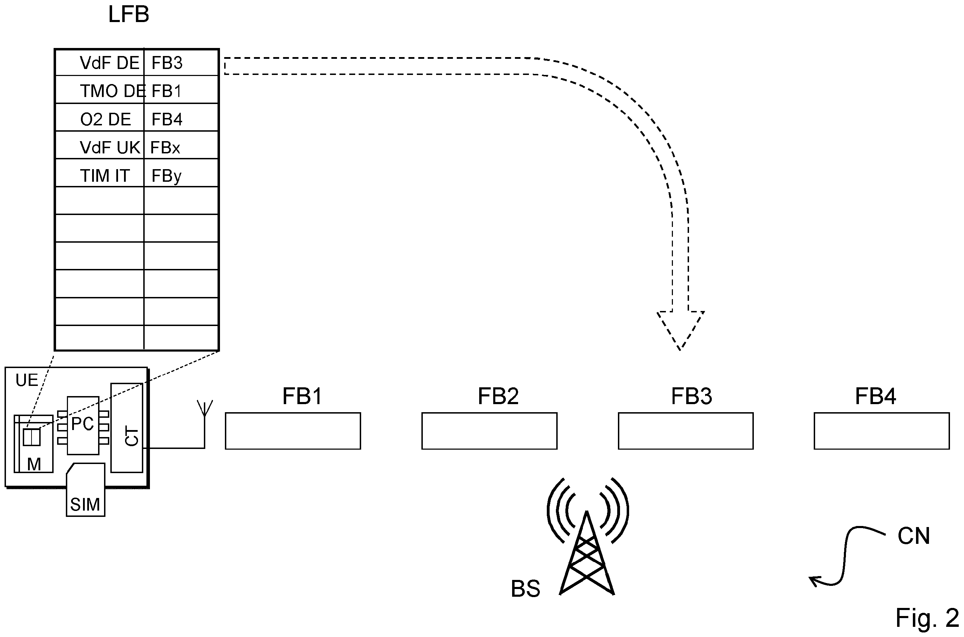

FIG. 2 schematically shows a user equipment UE of the type to which the present invention is applied as an embodiment. The user equipment UE comprises transceiver circuitry TC and processing circuitry PC. It further provides a memory unit M, in particular permanent memory. Additionally the user equipment is connectively coupled to a subscriber identification unit SIM, which stores the access credentials according to the subscription of the user equipment in a cellular network.

The user equipment is operated in a certain region in proximity of at least one base station BS. The base station BS is part of a cellular network CN and implements at least one of said radio access networks, or one or more subcategories of it.

This memory unit M holds a list of candidate frequency bands LFB. Said list of candidate frequency bands LFB comprises at least information about a cellular network, and an identification of at least one frequency band FB1, FB2, FB3, FB4 assigned to said cellular network.

Preferably the list of candidate frequency bands LFB provides more criteria usable for filtering, in particular a region, like a country or an area smaller than a country, or comprising a plurality of countries.

Additionally the list of candidate frequency bands LFB holds an indication of a radio access technology of the respective frequency band (FB1, FB2 ...). With that it is clarified if the frequency bands are searchable by the user equipment by applying said radio access technology.

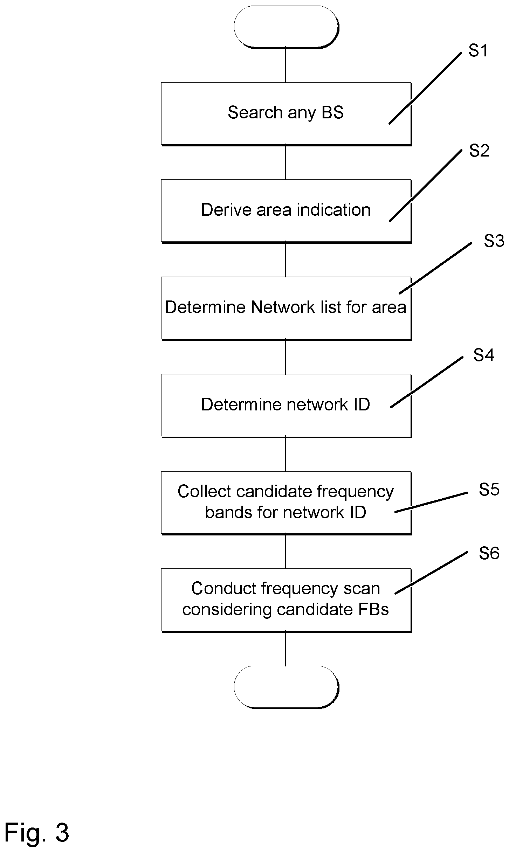

To carry out a frequency scan according to an aspect the user equipment UE carries out an operation as indicated in FIG. 3.

This procedure is in particular carried out after powering on the user equipment UE. However, also later frequency scans can be improved by applying the method according to this or another aspect.

According to this procedure the user equipment UE starts in step S1 to search any base station BS. This is preferably done by applying a supported radio access technology and/or category and searching a base station supporting this technology. Preferably the base station is searched on a list of default frequency bands, where the most likely frequency bands, i.e. for a supported radio access technology, are listed. The base station BS however does not need to be part of a cellular network CN where the user equipment UE is eligible to operate in.

When one base station BS is found, the user equipment can in step S2 derive an area indication from said base station. This is preferably done by retrieving the mobile country code (MCC), which is broadcasted by each base station. In an alternative aspect (not shown) the user equipment is communicatively coupled to a positioning sensor, like a GPS or other GNSS sensor. From the geo-position delivered by the positioning sensor in particular in an NMEA string, an area indication, in particular the country can be derived. This advantageously is carried out by map matching algorithms. For a user equipment installed in a car, this would be the most convenient way of identifying an area indication.

With the area indication the user equipment may determine in step S3 a network list for said area. E.g. in a certain country, indicated by a MCC, a known number of cellular networks is deployed. A list of cellular networks per country is provided regularly by the ITU under https://www.itu.int/dms_pub/itut/opb/sp/T-SP-E.212B-2013-PDF-E.pdf. Preferably at least parts of that list are available in the memory M of the user equipment.

The result is a list of MNCs for the area where the user equipment is operated. With that list, in step S4 a network ID is determined for which the user equipment is supposed to search for frequency bands.

In the home country it is preferably the home PLMN for which frequency bands are to be searched.

In other countries the user equipment may derive from the subscriber identification unit SIM the preferred PLMN, which network ID is then used as network ID for the subsequent steps.

In step S5 then from the stored list of frequency bands LFB a list of candidate frequency bands is determined. This is done in this aspect by selecting only those frequency bands which are assigned to the cellular network depicted by the previously determined network ID. This is already a remarkable reduction of potentially searchable frequency bands, in particular in light of 5G deployment.

In step S6 finally the frequency scan is carried out considering the candidate frequency bands. This means in particular that only the identified candidate frequency bands are selected to search for base stations where the user equipment may operate with.

Typically the frequency band scan leads to at least one base station BS and consequently the user equipment selects the most suitable base station for camping, wherein the suitability is defined for the respective standard.

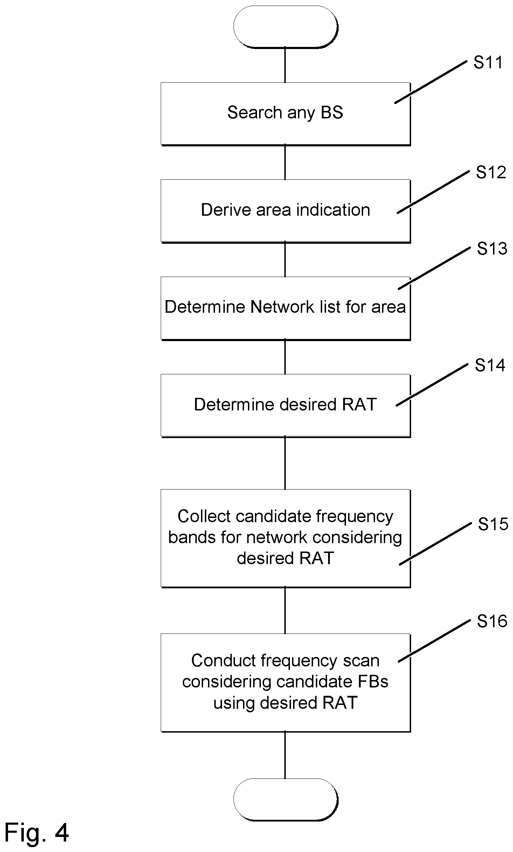

In an aspect the procedure is carried out as shown in FIG 4.

It starts with the step S11-S13, which basically complement steps S1-S3 of Fig. 3. In the next step S14 however the user equipment UE determines the desired radio access technology. This refers to either the technology generation e.g. 4G or 5G, but as well the category, like NB-IoT, Cat-M, which are supposed to be continued in 5G.

This determination step considers in this aspect the capabilities of the user equipment, means in which radio access technology the user equipment is capable of communicating with a base station of a cellular network. In case there are more than one radio access technology where the user equipment is capable of operating in, in this step also more than one desired RATs may be determined.

Alternatively one dedicated radio access technology is defined as desired radio access technology, e.g. because it allows a power-wise optimal operation of the user equipment.

The stored list of frequency blocks LFB also comprises in this aspect an indication of the radio access technology per frequency block (FB1, FB2 ...). With that the user equipment can in step S15 filter the (candidate) list of frequency blocks considering the desired radio access technology.

Preferably this aspect is combined with the one shown in Fig. 3, wherein not only the radio access technology but also the network ID of a preferred or home PLMN for a region is determined and consequently considered for filtering the list of frequency bands for determining a candidate list.

With the candidate list of frequency bands the user equipment conducts in step S16 a frequency band scan. This is done for the respective frequency bands by means of the determined desired radio access technology. That means a frequency band FB1 which is assigned to cellular network CN, identified by a MNC, is tried to be accessed with the means of the radio access technology that is identified in the list of frequency bands and preferably also maintained in the candidate list of frequency bands.

In the main embodiment the shown procedure steps for the user equipment UE start somewhat later as before.

Here a selected RAT is determined in steps S21 first. This may happen after the steps of Fig. 3 are conducted, while step S6 takes however into account the selected RAT.

The selected RAT is determined considering the convenience order. This means that it is most comfortable for a user equipment to find a frequency band during a frequency scan in a certain radio access technology than in another radio access technology. This comparison is identified for the user equipment based on experience or knowledge and made available through the convenience order. Based on the radio access technology the user equipment is capable of operating in, the selected RAT based on convenience order can be determined.

With that determined selected RAT, the user equipment collects in step S22 candidate frequency bands from the list of frequency bands.

Hence a frequency scan on the determined candidate frequency bands is carried out in step S23. This would in the normal cause of operation lead to the user equipment camping on a base station in the selected radio access technology, as shown in step S24.

However, the most suitable RAT for a frequency scan is not necessary the most suitable RAT for operating in the cellular network. If this differs, then the radio access technology where the user equipment wants to operate with is the desired RAT. It therefore requires additional steps to camp on a base station of this desired RAT, after the UE managed to camp on a base station in the selected RAT.

Hence the user equipment retrieves from the broadcast of the base station it is now camping on in step S25 a neighbour cell list.

In an analysis step S26 the user equipment determines if cells resp. base stations of the desired radio access technology are available. Following common mobility management operations it may be figured out if the signals of such neighbour cells are sufficiently strong receivable (which is usually defined as "suitable").

If neighbour cells in the desired RAT are available and suitable, then the user equipment will carry out a cell reselection in step S27 to the strongest i.e. best suitable of the identified neighbour base stations supporting said desired radio access technology.

With this embodiment the procedure to camp on a base station of a desired radio access technology is proposed that on the one hand massively increases the speed of carrying out a frequency scan, while on the other hand still any kind of radio access technology can be addressed for operating in the cellular network finally, without slowing down the frequency band scan.

Combinations of the aspects and embodiments are encompassed by the proposed invention.

In the above detailed description, reference is made to the accompanying drawings that show, by way of illustration, specific aspects and embodiments in which the invention may be practiced. These aspects and embodiments are described in sufficient detail to enable those skilled in the art to practice the invention. It is to be understood that the various aspects and embodiments of the invention, although different are not necessarily mutually exclusive. For example, a particular feature, structure, or characteristic described herein in connection with one aspect or embodiment may be implemented within other aspects or embodiments without departing from the scope of the invention. In addition, it is to be understood that the location or arrangement of individual elements within each disclosed aspect or embodiment may be modified without departing from the scope of the invention. The above detailed description is, therefore, not to be taken in a limiting sense, and the scope of the present invention is defined only by the appended claims, appropriately interpreted.

## Claims

1. Method for conducting a frequency scan by a user equipment "UE" configured to operate in one of a plurality of cellular networks "CN", each comprising a plurality of base stations "BS" employing a plurality of frequency bands, the method comprising the steps for the user equipment "UE" of:
- maintaining a list of frequency bands "LFB" assigned to at least one cellular network,
- determining at least one network identification criterion relating to a cellular network "CN",
- determining a list of candidate frequency bands from the list of frequency bands "LFB" considering said at least one network identification criterion, by selecting only those frequency bands which are assigned to the cellular network relating to the at least one network identification criterion, and
- conducting a frequency band scan considering said list of candidate frequency bands,
wherein determining the at least one network identification criterion comprises receiving from one of the plurality of base stations "BS" at least one system information block comprising a plurality of system information items, said at least one system information block comprising a system information item comprising a network identification criterion,
wherein the cellular network "CN" comprises at least one radio access network comprising a base station "BS", wherein the list of frequency bands "LFB" comprises an indication of the respective radio access network, wherein determining the list of candidate frequency bands comprises considering a selected radio access network,
wherein the selected radio access network is derived from a convenience order of radio access networks for conducting a frequency band search, and
wherein the user equipment maintains a desired radio access network identification, wherein in case the radio access network indicated by the desired radio access network indication differs from the selected radio access network the method further comprises the step of searching and switching to a base station "BS" of the radio access network indicated by said desired radio access network indication.

2. Method according to claim 1, said user equipment "UE" being communicatively coupled to at least one subscriber identification unit "SIM",
for determining said at least one network identification criterion the method comprises the step of:
- detecting an indication relating to an area where the user equipment "UE" is located,
- determining from the subscriber identification unit "SIM" at least one network identification criterion of a cellular network operating in said area, where the user equipment "UE" is eligible to operate in.

3. Method according to claim 2, wherein the step of determining an indication relating to an area where the user equipment "UE" is located comprises at least one out of the group of:
- starting a frequency band scan on a supported frequency for identifying one of said base stations "BS", and upon identification of said base station detecting an indication of the area where the base station "BS" is located,
- or carrying out a location determination by means of a positioning sensor communicatively coupled to the user equipment "UE".

4. Method according to claim 1, wherein the step of searching said base station "BS" considering said list of candidate frequency bands is carried out by means of said desired radio access technology.

5. Method according to claim 1, wherein the step of searching said base station "BS' considering said list of candidate frequency bands is carried out by means of said selected radio access technology, and retrieving deployment information of said desired radio access technology.

6. Method according to at least one of the claims 2 to 5, comprising the step after detection of said indication relating to an area, in case in the list of frequency bands "LFB" no candidate frequency bands are available for cellular networks of said area:
- requesting from a remote server an update for the list of frequency bands "LFB" for said area,
- downloading the update and storing it in the list of frequency bands "LFB".

7. Method according to at least one of the previous claims, comprising in case no candidate frequency bands for said network identification criterion is available, applying a default list of candidate frequency bands.

8. User equipment "UE" configured to operate in one of a plurality of cellular networks "CN", each comprising a plurality of base stations "BS" employing a plurality of frequency bands, wherein the user equipment "UE" is configured to:
- maintain a list of frequency bands "LFB" assigned to at least one cellular network,
- determine at least one network identification criterion relating to a cellular network,
- determine a list of candidate frequency bands from the list of frequency bands "LFB" considering said at least one network identification criterion, by selecting only those frequency bands which are assigned to the cellular network relating to the at least one network identification criterion, and
- conduct a frequency band scan on said list of candidate frequency bands,
wherein for determining the at least one network identification the user equipment "UE" is configured to receive from one of the plurality of base stations "BS" at least one system information block, comprising a plurality of system information items, said at least one system information block comprising a system information item comprising a network identification criterion,
wherein the cellular network comprising at least one radio access network, and a base station "BS" is part of at least one of said radio access networks, and the list of frequency bands "LFB" comprises an indication of the respective radio access network, wherein for determining the list of candidate frequency bands the user equipment is further configured to consider a selected radio access network,
wherein the selected radio access network is derived from a convenience order of radio access networks for conducting a frequency band search,
the user equipment "UE" being further configured to maintain a desired radio access network indication, wherein in case the radio access network indicated by the desired radio access network indication differs from the selected radio access network the user equipment is configured to search and switch to a base station "BS" of the radio access network indicated by said desired radio access network indication.

9. User equipment "UE" according to claim 8, communicatively coupled to at least one subscriber identification unit "SIM", being configured for determining said at least one network identification criterion to:
- detect an indication relating to an area where the user equipment "UE" is located,
- determine from the subscriber identification unit "SIM" at least one network identification criterion of a cellular network "CN" operating in said area, where the user equipment "UE" is eligible to operate in.

10. User equipment "UE" according to claim 9, wherein for determining an indication relating to an area where the user equipment is located the user equipment "UE" is configured to at least one out of the group of:
- start a frequency band scan on a supported frequency for identifying one of said base stations "BS", and upon identification of said base station detecting an indication of the area where the base station "BS" is located,
- or carry out a location determination by means of a positioning sensor communicatively coupled to the user equipment "UE".

## Patentansprüche

1. Verfahren zum Durchführen einer Frequenzabtastung mittels eines Endgerätes (*user equipment*, "UE"), das dazu konfiguriert ist, in einem unter einer Vielzahl von Mobilfunknetzen (*cellular networks*, "CN") betrieben zu werden, wobei jedes davon eine Vielzahl von Basisstationen (*base stations*, "BS") umfasst, die eine Vielzahl von Frequenzbändern einsetzen, wobei das Verfahren die folgenden vom Endgerät "UE" zu verrichtenden Schritte umfasst:
- Pflegen einer Liste von Frequenzbändern (*list offrequency bands*, "LFB"), die mindestens einem Mobilfunknetz zugewiesen ist,
- Bestimmen mindestens eines Netz-Identifikationskriteriums, das auf ein Mobilfunknetz "CN" bezogen ist,
- Bestimmen einer Liste von Frequenzband-Kandidaten aufgrund der Liste von Frequenzbändern "LFB", wobei das mindestens eine Netz-Identifikationskriterium berücksichtigt wird, indem nur solche Frequenzbänder ausgewählt werden, die dem Mobilfunknetz zugewiesen sind, das auf das mindestens eine Netz-Identifikationskriterium bezogen ist, und
- Durchführen einer Frequenzbandabtastung unter Berücksichtigung der Liste von Frequenzband-Kandidaten,
wobei Bestimmen des mindestens einen Netz-Identifikationskriteriums Empfangen mindestens eines Systeminformationsblocks von einer der Vielzahl von Basisstationen "BS" umfasst, der eine Vielzahl von Systeminformationsgegenständen umfasst, wobei der mindestens eine Systeminformationsblock einen Informationsgegenstand umfasst, der ein Netz-Identifikationskriterium umfasst,
wobei das Mobilfunknetz "CN" mindestens ein Funkzugriffsnetz umfasst, das eine Basisstation "BS" umfasst, wobei die Liste von Frequenzbändern "LFB" eine Kennzeichnung des jeweiligen Funkzugriffsnetzes umfasst, wobei Bestimmen der Liste von Frequenzband-Kandidaten Berücksichtigen eines ausgewählten Funkzugriffsnetzes umfasst
wobei das ausgewählte Funkzugriffsnetz von einer zweckdienlichen Ordnung von Funkzugriffsnetzen zum Durchführen einer Frequenzbandsuche abgeleitet ist, und
wobei das Endgerät eine gewünschte Funkzugriffsnetz-Identifikation pflegt, wobei im Fall, dass das Funkzugriffsnetz, auf das die Kennzeichnung des gewünschten Funkzugriffsnetz hinweist, von dem ausgewählten Funkzugriffsnetz verschieden ist, das Verfahren ferner den Schritt Suchen und Umschalten auf eine Basisstation "BS" des Funkzugriffsnetzes, auf die von der gewünschten Kennzeichnung des Funkzugriffsnetz hingewiesen wird, umfasst.

2. Verfahren nach Anspruch 1, wobei das Endgerät "UE" mit mindestens einer Teilnehmer-Identifikationseinheit (*subscriber identification unit*, "SIM") kommunikativ gekoppelt ist, um das mindestens eine Netz-Identifikationskriterium zu bestimmen, wobei das Verfahren folgende Schritte umfasst:
- Erfassen einer Kennzeichnung mit Bezug auf ein Gebiet, in dem das Endgerät "UE" lokalisiert ist,
- Bestimmen aufgrund der Teilnehmer-Identifikationseinheit "SIM" mindestens eines Netz-Identifikationskriteriums eines Mobilfunknetzes, das in dem Gebiet betrieben wird, in dem das Endgerät "UE" betriebsberechtigt ist.

3. Verfahren nach Anspruch 2, wobei der Schritt Bestimmen einer Kennzeichnung mit Bezug auf ein Gebiet, in dem das Endgerät "UE" lokalisiert ist, mindestens einen solchen aus der folgenden Gruppe umfasst:
- Starten eine Frequenzbandabtastung bei einer unterstützten Frequenz zum Identifizieren einer der Basisstationen "BS" sowie bei Identifizierung der Basisstation Erfassen einer Kennzeichnung des Gebiets, in dem die Basisstation "BS" lokalisiert ist,
- oder Durchführen einer Ortsbestimmung mittels eines Positionsgebungssensors, der mit dem Endgerät "UE" kommunikativ gekoppelt ist.

4. Verfahren nach Anspruch 1, wobei der Schritt Suchen nach der Basisstation "BS" unter Berücksichtigung der Liste von Frequenzband-Kandidaten mittels der gewünschten Funkzugriffstechnologie durchgeführt wird.

5. Verfahren nach Anspruch 1, wobei der Schritt Suchen nach der Basisstation "BS" unter Berücksichtigung der Liste von Frequenzband-Kandidaten mittels der gewünschten Funkzugriffstechnologie und Abrufen von Bereitstellungsinformationen der gewünschten Funkzugriffstechnologie durchgeführt wird.

6. Verfahren nach mindestens einem der Ansprüche 2 bis 5, umfassend folgende Schritte nach Erfassung der Kennzeichnung mit Bezug auf ein Gebiet, falls keine Frequenzband-Kandidaten in der Liste von Frequenzbändern" LFB" für Mobilfunknetze in dem Gebiet verfügbar sind:
- Anfordern von einem Remote-Server einer Aktualisierung der Liste von Frequenzbändern "LFB" für das Gebiet,
- Herunterladen der Aktualisierung und Speichern derselben in der Liste von Frequenzbändern "LFB".

7. Verfahren nach einem der vorhergehenden Ansprüche, umfassend Anwenden einer Standardliste von Frequenzband-Kandidaten, falls keine Frequenzband-Kandidaten für das Netz-Identifikationskriterium verfügbar sind.

8. Endgerät "UE", das dazu konfiguriert ist, in einem von einer Vielzahl von Mobilfunknetzen "CN" betrieben zu werden, wobei jedes davon eine Vielzahl von Basisstationen "BS" umfasst, die eine Vielzahl von Frequenzbändern einsetzen, wobei das Endgerät "UE" wie folgt konfiguriert ist:
- zum Pflegen einer Liste von Frequenzbändern "LFB", die mindestens einem Mobilfunknetz zugewiesen sind,
- zum Bestimmen mindestens eines Netz-Identifikationskriteriums, das auf ein Mobilfunknetz bezogen ist,
- zum Bestimmen einer Liste von Frequenzband-Kandidaten aufgrund der Liste von Frequenzbändern "LFB" untere Berücksichtigung mindestens eines Netz-Identifikationskriteriums, indem nur solche Frequenzbänder ausgewählt werden, die einem Mobilfunknetz mit Bezug auf das mindestens ein Netz-Identifikationskriterium zugewiesen sind, und
- zum Durchführen einer Frequenzbandabtastung der Liste von Frequenzband-Kandidaten,
wobei das Endgerät "UE" zum Bestimmen der mindestens einen Netzidentifikation dazu konfiguriert ist, mindestens einen Systeminformationsblock von der Vielzahl von Basisstationen "BS" zu empfangen, der eine Vielzahl von Systeminformationsgegenständen umfasst, wobei der mindestens eine Systeminformationsblock einen Systeminformationsgegenstand umfasst, der ein Netz-Identifikationskriterium umfasst,
wobei das Mobilfunknetz, das mindestens ein Funkzugriffsnetz und eine Basisstation "BS" umfasst, Teil mindestens eines der Funkzugriffsnetze ist, und wobei die Liste von Frequenzbändern "LFB" eine Kennzeichnung des jeweiligen Funkzugriffsnetzes umfasst, wobei das Endgerät zum Bestimmen der Liste von Frequenzband-Kandidaten ferner dazu konfiguriert ist, ein ausgewähltes Funkzugriffsnetz zu berücksichtigen,
wobei das gewünschte Funkzugriffsnetz von einer zweckdienlichen Ordnung von Funkzugriffsnetzen zum Durchführen einer Frequenzbandsuche abgeleitet ist,
wobei das Endgerät "UE" ferner dazu konfiguriert ist, eine gewünschte Funkzugriffsnetzkennzeichnung zu pflegen, wobei im Fall, dass das Funkzugriffsnetz, auf das die Kennzeichnung des gewünschten Funkzugriffsnetz hinweist, von dem ausgewählten Funkzugriffsnetz verschieden ist, das Endgerät dazu konfiguriert ist, nach einer Basisstation "BS" des Funkzugriffsnetzes zu suchen und auf eine Basisstation "BS" des Funkzugriffsnetzes umzuschalten, auf die durch die Kennzeichnung des gewünschten Funkzugriffsnetzes hingewiesen wird.

9. Endgerät "UE" nach Anspruch 8, das mit mindestens einer Teilnehmer-Identifikationseinheit SIM kommunikativ gekoppelt ist, wobei diese dazu konfiguriert ist, dieses eine Netz-Identifikationskriterium zu bestimmen und dabei wie folgt verfahren wird:
- Erfassen einer Kennzeichnung mit Bezug auf ein Gebiet, in dem das Endgerät "UE" lokalisiert ist,
- Bestimmen aufgrund der Teilnehmer-Identifikationseinheit "SIM" mindestens eines Netz-Identifikationskriteriums eines Mobilfunknetzes "CN", das in dem Gebiet betrieben wird, in dem das Endgerät "UE" betriebsberechtigt ist.

10. Endgerät "UE" nach Anspruch 9, wobei zum Bestimmen einer Kennzeichnung mit Bezug auf ein Gebiet, in dem das Endgerät "UE" lokalisiert ist, dasselbe dazu konfiguriert ist, mindestens entsprechend einem aus der folgenden Gruppe zu verfahren:
- Starten einer Frequenzbandabtastung bei einer unterstützten Frequenz zum Identifizieren einer der Basisstationen "BS" und nach erfolgter Identifizierung der Basisstation Erfassen einer Kennzeichnung des Gebiets, in dem die Basisstation "BS" lokalisiert ist,
- oder Durchführen einer Ortsbestimmung mittels eines Positionsgebungssensors, der kommunikativ mit dem Endgerät "UE" gekoppelt ist.

## Revendications

1. Procédé pour effectuer un balayage de fréquence par un équipement utilisateur « UE » configuré pour fonctionner dans l'un d'une pluralité de réseaux cellulaires « CN », comprenant chacun une pluralité de stations de base « BS » utilisant une pluralité de bandes de fréquences, le procédé comprenant les étapes pour l'équipement utilisateur « UE » consistant à :
- maintenir une liste de bandes de fréquences « LFB » attribuées à au moins un réseau cellulaire,
- déterminer au moins un critère d'identification de réseau relatif à un réseau cellulaire « CN »,
- déterminer une liste de bandes de fréquences candidates à partir de la liste de bandes de fréquences « LFB » en tenant compte dudit au moins un critère d'identification de réseau, en sélectionnant uniquement les bandes de fréquences qui sont attribuées au réseau cellulaire relatives audit au moins un critère d'identification de réseau, et
- effectuer un balayage de bandes de fréquences en tenant compte de ladite liste de bandes de fréquences candidates,
dans lequel la détermination du ou des critères d'identification de réseau comprend la réception, de l'une de la pluralité de stations de base « BS », d'au moins un bloc d'informations système comprenant une pluralité d'éléments d'informations système, ledit au moins un bloc d'informations système comprenant un élément d'informations système comprenant un critère d'identification du réseau,
dans lequel le réseau cellulaire « CN » comprend au moins un réseau d'accès radio comprenant une station de base « BS », dans lequel la liste de bandes de fréquences « LFB » comprend une indication du réseau d'accès radio respectif, dans lequel la détermination de la liste de bandes de fréquences candidates comprend la prise en compte d'un réseau d'accès radio sélectionné,
dans lequel le réseau d'accès radio sélectionné est dérivé d'un ordre de commodité de réseaux d'accès radio pour effectuer une recherche de bande de fréquence, et
dans lequel l'équipement utilisateur maintient une identification de réseau d'accès radio souhaité, dans lequel, au cas où le réseau d'accès radio indiqué par l'indication de réseau d'accès radio souhaité diffère du réseau d'accès radio sélectionné,
le procédé comprend en outre l'étape de recherche et de commutation vers une station de base « BS » du réseau d'accès radio réseau indiqué par ladite indication de réseau d'accès radio souhaité.

2. Procédé selon la revendication 1, ledit équipement utilisateur « UE » étant couplé en communication à au moins une unité d'identification d'abonné « SIM »,
pour déterminer ledit au moins un critère d'identification de réseau, le procédé comprend les étapes consistant à :
- détecter une indication relative à une zone où se trouve l'équipement utilisateur « UE »,
- déterminer, à partir de l'unité d'identification d'abonné « SIM », au moins un critère d'identification de réseau d'un réseau cellulaire fonctionnant dans ladite zone, dans laquelle l'équipement utilisateur « UE » est éligible pour fonctionner.

3. Procédé selon la revendication 2, dans lequel l'étape de détermination d'une indication relative à une zone où se trouve l'équipement utilisateur « UE » comprend au moins l'une des actions suivantes :
- le lancement d'un balayage de bande de fréquence sur une fréquence supportée pour identifier l'une desdites stations de base « BS », et, lorsque ladite station de base est identifiée, la détection d'une indication de la zone où se trouve la station de base « BS »,
- ou la réalisation d'une détermination de location au moyen d'un capteur de positionnement couplé en communication à l'équipement utilisateur « UE ».

4. Procédé selon la revendication 1, dans lequel l'étape de recherche de ladite station de base « BS » en tenant compte de ladite liste de bandes de fréquences candidates est réalisée au moyen de ladite technologie d'accès radio souhaitée.

5. Procédé selon la revendication 1, dans lequel l'étape de recherche de ladite station de base « BS » en tenant compte de ladite liste de bandes de fréquences candidates est réalisée au moyen de ladite technologie d'accès radio sélectionnée, et au moyen de la récupération des informations de déploiement de ladite technologie d'accès radio souhaitée.

6. Procédé selon au moins l'une des revendications 2 à 5, comprenant les étapes, après détection de ladite indication relative à une zone, au cas où, dans la liste des bandes de fréquences « LFB », aucune bande de fréquence candidate n'est disponible pour les réseaux cellulaires de ladite zone :
- de demande, à un serveur distant, d'une mise à jour de la liste des bandes de fréquences « LFB » pour ladite zone,
- de téléchargement de la mise à jour et de son stockage dans la liste des bandes de fréquences « LFB ».

7. Procédé selon au moins l'une des revendications précédentes, comprenant, au cas où aucune bande de fréquence candidate pour ledit critère d'identification de réseau n'est disponible, l'application d'une liste par défaut de bandes de fréquences candidates.

8. Équipement utilisateur « UE » configuré pour fonctionner dans l'un d'une pluralité de réseaux cellulaires « CN », comprenant chacun une pluralité de stations de base « BS » utilisant une pluralité de bandes de fréquences, l'équipement utilisateur « UE » étant configuré pour :
- maintenir une liste de bandes de fréquences « LFB » attribuées à au moins un réseau cellulaire,
- déterminer au moins un critère d'identification de réseau relatif à un réseau cellulaire,
- déterminer une liste de bandes de fréquences candidates parmi la liste de bandes de fréquences « LFB » en tenant compte dudit au moins un critère d'identification de réseau, en sélectionnant uniquement les bandes de fréquences qui sont attribuées au réseau cellulaire relatif audit au moins un critère d'identification de réseau, et
- effectuer un balayage de bandes de fréquences sur ladite liste de bandes de fréquences candidates, dans lequel, afin de déterminer l'au moins une identification de réseau, l'équipement utilisateur « UE » est configuré pour recevoir, d'une de la pluralité de stations de base « BS », au moins un bloc d'informations système, comprenant une pluralité d'éléments d'informations système, ledit au moins un bloc d'informations système comprenant un élément d'informations système comprenant un critère d'identification du réseau,
dans lequel le réseau cellulaire comprenant au moins un réseau d'accès radio et une station de base « BS », fait partie d'au moins un desdits réseaux d'accès radio, et la liste de bandes de fréquences « LFB » comprend une indication du réseau d'accès radio respectif, dans lequel, afin de déterminer la liste des bandes de fréquences candidates, l'équipement utilisateur est en outre configuré pour tenir compte d'un réseau d'accès radio sélectionné,
dans lequel le réseau d'accès radio sélectionné est dérivé d'un ordre de commodité de réseaux d'accès radio pour conduire une recherche de bande de fréquences,
l'équipement utilisateur « UE » étant en outre configuré pour maintenir une indication de réseau d'accès radio souhaitée, dans lequel, au cas où le réseau d'accès radio indiqué par l'indication de réseau d'accès radio souhaitée diffère du réseau d'accès radio sélectionné, l'équipement utilisateur est configuré pour rechercher et basculer vers une station de base « BS » du réseau d'accès radio indiqué par ladite indication de réseau d'accès radio souhaité.

9. Équipement utilisateur « UE » selon la revendication 8, couplé en communication à au moins une unité « SIM » d'identification d'abonné, étant configuré pour déterminer ledit au moins un critère d'identification de réseau pour :
- détecter une indication relative à une zone où se trouve l'équipement utilisateur « UE »,
- déterminer, à partir de l'unité « SIM » d'identification d'abonné, au moins un critère d'identification de réseau d'un réseau cellulaire « CN » fonctionnant dans ladite zone, dans laquelle l'équipement utilisateur « UE » est éligible pour fonctionner.

10. Équipement utilisateur « UE » selon la revendication 9, dans lequel, afin de déterminer une indication relative à une zone où se trouve l'équipement utilisateur, l'équipement utilisateur « UE » est configuré pour réaliser au moins l'une des actions suivantes :
- le lancement d'un balayage de bande de fréquence sur une fréquence supportée afin d'identifier l'une desdites stations de base « BS », et, lorsque ladite station de base a été identifiée, détecter une indication de la zone où se trouve la station de base « BS »,
- ou effectuer une détermination de location au moyen d'un capteur de positionnement couplé en communication à l'équipement utilisateur « UE ».
